Europäisches Patentamt

European Patent Office

Office européen des brevets

(11) Publication number: **0 192 204**
**A1**

# (12) EUROPEAN PATENT APPLICATION

(21) Application number: **86101915.6**

(22) Date of filing: **14.02.86**

(51) Int. Cl.⁴: **C 03 B 23/04**
C 03 B 37/025, C 03 B 37/075
C 03 B 29/00, C 03 B 20/00
G 01 N 30/60

(30) Priority: **19.02.85 US 702988**

(43) Date of publication of application:
**27.08.86 Bulletin 86/35**

(84) Designated Contracting States:
**CH DE FR GB LI NL**

(71) Applicant: **THE PERKIN-ELMER CORPORATION**
**761 Main Avenue**
**Norwalk Connecticut 06859-0074(US)**

(72) Inventor: **Scott, Raymond P.W.**
**18 Mill Road**
**Easton Connecticut 06612(US)**

(72) Inventor: **Ogan, Kenneth**
**RD No. 1, Oakridge Road**
**Bethel Connecticut 06801(US)**

(74) Representative: **Patentanwälte Grünecker, Kinkeldey,**
**Stockmair & Partner**
**Maximilianstrasse 58**
**D-8000 München 22(DE)**

(54) **Flexible capillary chromatographic column.**

(57) The present invention is directed to a method and apparatus for fabricating a flexible capillary chromatographic column, which includes the steps of supplying a rigid glass tube (10), feeding the tube into a drawing machine (10) and drawing the tube until it has capillary dimensions and is flexible, heating the so drawn capillary to its annealing temperature, and maintaining the tube at its annealing temperature until it is substantially completely free of fissures. In this way, external coatings normally applied for purposes of protecting against propagation of microfissures are unnecessary.

FIG. 1

Croydon Printing Company Ltd.

FLEXIBLE CAPILLARY CHROMATOGRAPHIC COLUMN

## Field of Invention

The present invention generally relates to a flexible capillary tubing and, in particular, is directed to a flexible glass capillary column having an uncoated exterior surface.

## Background of the Invention

In recent years highly flexible capillary columns have been developed. Initially, such capillaries were made only from fused silica, although more recently such capillaries were also manufactured from soft-glasses.

Conventionally, both types of flexible capillary columns were provided with an external coating of a polyimide to control the friability of the material, which is caused by corrosion at the microfissures of the capillary material. In fact, water vapor in the atmosphere is most frequently the primary chemical antagonist. Heretofore, in the process of manufacturing the flexible capillary columns, it was thought necessary to apply an external coating almost immediately after the drawing stage. The application of the external coating was a complex and expensive process. Further, it was somewhat difficult to maintain a uniform thickness of the coating over the complete length cf the capillary.

Accordingly, one object of the present invention is to provide a highly flexible capillary, which does not require such an external coating.

2

0192204

## Summary of the Invention

Briefly, the present invention is directed to a new and improved method and apparatus for fabricating flexible capillary chromatographic columns, which includes the steps of supplying a rigid, hollow glass tube, feeding the glass tube into a drawing machine and drawing said tube until it has capillary dimensions and is flexible, heating the so drawn capillary tube to approximately the annealing temperature thereof, and maintaining said tube at this annealing temperature until it is substantially completely free of internal fissures.

There has thus been outlined rather broadly the more important features of the invention in order that the detailed description thereof that follows may be better understood, and in order that the present contribution to the art may be better appreciated. There are, of course, additional features of the invention that will be described more fully hereinafter. Those skilled in the art will appreciate that the conception on which this disclosure is based may readily be utilized as the basis of the designing of other methods and apparatus for carrying out the various purposes of the invention. It is important, therefore, that this disclosure be regarded as including such equivalent methods and apparatus as do not depart from the spirit and scope of the invention.

Several embodiments of the invention have been chosen for purposes of illustration and description, and are shown in the accompanying drawings forming a part of the specification.

## Brief Description of the Drawings

Fig. 1 is a schematic diagram of an apparatus for carrying out a method of forming capillary columns embodying the principles of the present invention;

Fig. 2 is a schematic diagram similar to Fig. 1, but showing another embodiment of the invention; and

Fig. 3 is a schematic diagram similar to Figs. 1 and 2, but showing still another embodiment of the invention.

## Detailed Description of the Presently Preferred Embodiments

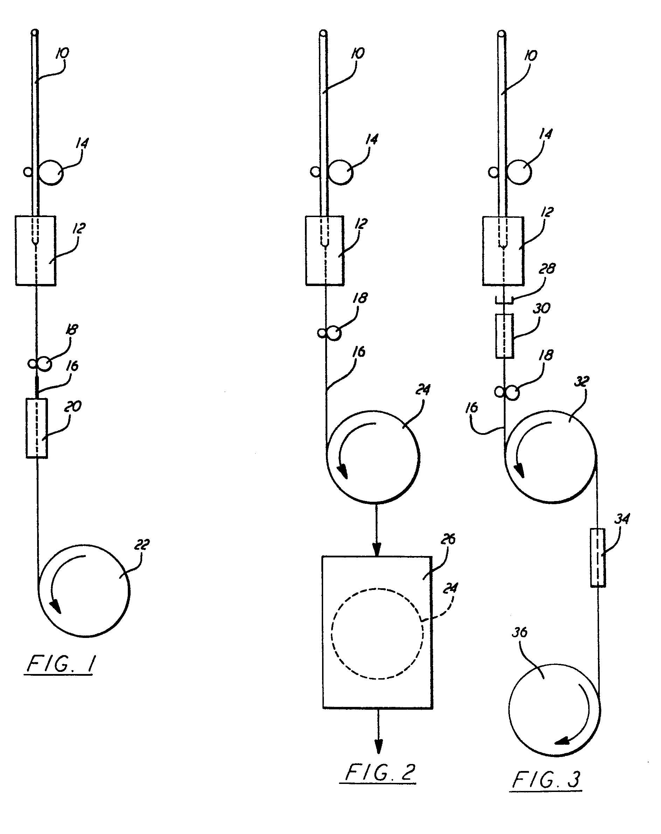

Referring to the embodiment of the invention illustrated in Fig. 1, a rigid glass tube 10 having an outside diameter of about 4 mm and an inside diameter of about 2.5 mm is used as the feed stock. The rigid glass tube 10 is initially cleaned, for example, with a 10 percent hydrochloric acid solution which is rinsed with water and subsequently dried. Preferably, thereafter, the tube is handled with a gloved hand.

The cleaned tube 10 is fed into a drawing machine 12 via a set of feed pulleys 14. The temperature of the drawing machine 12 is set at about 670°C for soda lime glass. The resultant capillary column or tubing 16 is drawn from the machine 12 via a set of draw pulleys 18. The driving motors, not shown, for the feed pulleys 14 and the draw pulleys 18 must be carefully adjusted to ensure a smooth, continuous linear movement of the drawn capillary column 16. It is

0192204

presently preferred that the drawing ratio, i.e. the ratio of the drawn length to the feed length, be of the order of about 110:1, which results in capillary columns having an outside diameter of about 0.3 mm. and an inside diameter of about 0.2 mm.

Heretofore, it was thought necessary that a capillary column, to retain its strength and, most importantly, its flexibility, be provided with an external coating as soon as possible after it was formed. According to the present invention, it has been found that a suitable high flexible capillary column can be formed without an external coating. To this effect, the method of the invention further includes the step of heating the capillary column or tubing 16 to its annealing temperature in an oven or tube furnace 20 immediately after it is drawn so that there is little opportunity for moisture to increase its friability. That is, the capillary tube is pulled, without coating, and passed through this furnace which is held at a temperature of the order of 600°C. As a result the capillary is subjected to a temperature of about 600°C from about 15 to about 25 seconds, the linear speed of the tubing being about 2 cm. per second. Thus, preferably, for soda lime glass the annealing temperature is in the range of from about 500°C to about 620°C for a period of time from about 20 seconds to about 60 seconds. Thereafter, the capillary column 16 is wound on a take-up drum 22, which is preferably driven by a dedicated motor, not shown in the drawing. It will be appreciated that the pulling force generated by the take-up reel must be minimized, i.e. the speed of the take-up reel must be closely matched to that of the pulling wheel so that the capillary tubing is not subjected to additional pulling and elongation while undergoing annealing.

The above method is equally applicable to borosilicate glass (PYREX) or fused silica capillary columns. However, preferably, for such materials the annealing temperature is in the range of from about 750°C to about 820°C and from about 1400°C to about 1500°C for fused silica.

Referring next to the embodiment of Fig. 2, the rigid glass tube 10 is initially cleaned, as described hereinbefore in connection with the embodiment of Fig. 1, and then fed into the drawing machine 12 via a set of feed pulleys 14. As indicated above the temperature of the drawing machine is set at about 670°C for soda lime glass. The resultant capillary column or tubing 16 is drawn from the machine 12 via a set of draw pulleys 18. Suitable driving motors for the feed pulleys 14 and draw pulleys 18 are provided. At this step in the method, the drawing ratios and capillary column dimensions are the same as those indicated hereinbefore in connection with the embodiment of Fig. 1. Subsequent to the draw pulleys 18, the capillary column is wound on a take-up drum 24. In some embodiments the capillary is coated with a suitable moisture impervious single or double coating on the external surface, such as polyimide, for example. A suitable method of coating the exterior surface is described in U.S. Patent Application Serial No. 629,398 filed July 10, 1984, which description is incorporated herein by reference.

Still referring to Fig. 2, the next step in the method is to place the take-up reel or drum 24 together with the capillary tubing thereon in an annealing furnace 26. Then, the complete capillary tubing is subjected to a temperature of the order of about 440°C for a period of from about 16 to about 24 hours. In the embodiments wherein the capillary was coated, the prolonged heating at this temperature pyrolyzed the polyimide external coating. In any case, the temperature must be sufficient to anneal the soft glass capillary. The resulting capillary column systems are nude in the sense that they have no external coating and yet retain considerable flexibility over a good length of time.

The method described hereinbefore in connection with Fig. 2, relating to processing soda lime glass is equally applicable to PYREX or fused silica capillary columns. However, preferably, when using these materials the anealing temperature is in the range of from about 600°C to about 650°C for PYREX and from about 1400°C to about 1500°C for fused silica.

Referring next to Fig. 3, the rigid glass tube 10 is initially cleaned, as described hereinbefore in connection with the embodiments of Figs. 1 and 2, and then fed into the draw machine 12 via a set of feed pulleys 14. As indicated above the temperature of the draw machine is set at about 670°C for soda lime glass. The resultant capillary column or tubing 16 is drawn from the machine 12 via a set of draw pulleys 18. In some embodiments, the capillary is coated with a suitable moisture impervious single or double coating on the external surface, such as polyimide for example. A suitable method of coating the exterior surface, as well as the internal surface is described in U.S. Patent Application Serial No. 629,398 filed July 10, 1984, which description is incorporated herein by reference. Fig. 3 shows a coating means at 28 and a curing means 30, which may be employed in some systems and excluded in others, as desired. Subsequent to the draw process 18, the capillary column is wound on a take-up drum 32.

0192204

The next step in the system, as seen in Fig. 3, may take place at a subsequent point in time. It also may take place at a different physical location, if desired. According to this step the capillary tubing is unwound from the take-up reel 32 and passed through a tube furnace 34 and then collected again on a second take-up reel 36, thereby generating a naturally straight, but annealed capillary column. That is, the capillary is pulled through the tube furnace 34, which is held at a temperature of the order of about 600°C from about 15 to about 40 seconds, the linear speed of the tubing being about 1 to 2 cm per second. As indicated hereinbefore in connection with the embodiment of Fig. 1, preferably, for soda lime glass the anealing temperature is in the range of from about 500°C to about 620°C for a period of time from about 20 seconds to about 60 seconds. The pulling force generated by the take-up reel 36 must be minimized so as not to subject the capillary tubing to unnecessary elongation while undergoing annealing.

The above method is equally applicable to PYREX or fused silica capillary columns. However, preferably, when using these materials the annealing temperature is in the range of from about 750°C to about 820°C for PYREX and from about 1400°C to about 1500°C for fused silica.

It will thus be seen that the invention does indeed provide a new and improved system for producing a highly flexible capillary chromatographic column, which does not require an external coating.

Although certain particular embodiments of the invention have been herein disclosed for purposes of explanation, various modifications thereof, after study of the specification, will be apparent to those skilled in the art to which the invention pertains.

## What is Claimed is:

1. A method of fabricating a flexible capillary chromatographic column comprising the steps of:

supplying a rigid glass tube, said tube being hollow and having an external surface and an internal surface;

feeding said glass tube into a drawing machine and drawing said tube until it has capillary dimensions and is flexible;

heating said so drawn capillary tube to the annealing temperature thereof; and

maintaining said tube at said annealing temperature until it is substantially completely free of fissures.

2. A method of fabricating a flexible capillary chromatographic column according to Claim 1 wherein said step of heating said so drawn capillary tube to annealing temperature and said step of maintaining said tube at said annealing temperature includes the step of continuously passing said capillary tube through a tube furnace.

3. A method of fabricating a flexible capillary chromatographic column according to Claim 1 wherein said rigid glass tube has a melting point of less than about 1100°C and wherein said capillary tube is maintained at an annealing temperature of the order of about 600°C for a time period of from about 15 to about 25 seconds.

4.  A method of fabricating a flexible capillary chromatographic column according to Claim 3 wherein said rigid glass tube is fabricated from soda lime glass.


5.  A method of fabricating a flexible capillary chromatographic column according to Claim 1 wherein said capillary tube is fabricated from fused silica and is annealed at a temperature of from about 1400°C to about 1500°C.


6.  A method of fabricating a flexible capillary chromatographic column according to Claim 1 wherein said rigid glass tube is fabricated from PYREX and is annealed at a temperature of from about 750°C to about 820°C.


7.  A method of fabricating a flexible capillary chromatographic column comprising the steps of:

supplying a rigid glass tube, said tube being hollow and having an external surface and an internal surface;

feeding said glass tube into a drawing machine and drawing said tube until it has capillary dimensions and is flexible;

winding said so drawn capillary tube on a take-up reel;

heating said take-up reel with said capillary tube thereon to the annealing temperature of said capillary tube; and

maintaining said tube in said furnace at said annealing temperature until it is substantially completely free of fissures.


8.   A method of fabricating a flexible capillary chromatographic column comprising the steps of:

supplying a rigid glass tube, said tube being hollow and having an external surface and an internal surface;

feeding said glass tube into a drawing machine and drawing said tube until it has capillary dimensions and is flexible;

passing said tube through an external coating stage for applying a moisture impervious coating to the external surface of said capillary tube;

winding said so coated capillary tube on a take-up reel;

unwinding said capillary tube from said take-up reel and passing said capillary tube to a tubular annealing furnace;

maintaining said capillary tube in said annealing furnace until it is substantially completely free of fissures; and

removing said capillary tube from said annealing furnace and winding it on a second take-up reel.

9. Apparatus for fabricating a flexible chromatographic column comprising, in combination:

means for supplying a rigid glass tube, said tube being hollow and having an external surface and an internal surface;

means for feeding said glass tube into a drawing machine and drawing said tube until it has capillary dimensions and is flexible;

means for heating said so drawn capillary tube to the annealing temperature thereof; and

means for maintaining said tube at said annealing temperature until it is substantially completely free of fissures.

*FIG. 1*

*FIG. 2*

*FIG. 3*

# EUROPEAN SEARCH REPORT

European Patent Office

0192204

EP 86101915.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PATENT ABSTRACTS OF JAPAN, unexamined applications, C field, vol. 6, no. 54, April 9, 1982 THE PATENT OFFICE JAPANESE GOVERNMENT page 162 C 97 <br><br> * Kokai-nr. 56-169 136 (FURUKAWA) * | 1,7,9 | C 03 B 23/04 <br> C 03 B 37/025 <br> C 03 B 37/075 <br> C 03 B 29/00 <br> C 03 B 20/00 <br> G 01 N 30/60 |
| Y | US - A - 4 231 778 (GRAHAM) <br> * Claims 1,4,8 * | 1,7,9 | |
| A | DD - A - 159 946 (SPECIAL. KONST. BJURO) <br> * Abstract; fig. 1,2 * | | |
| A | FR - A1 - 2 549 228 (VYSOKA SKOLA CHEMICKO-TECHNOLOGICKA) <br> * Totality * | | **TECHNICAL FIELDS SEARCHED (Int. Cl.4)** <br><br> C 03 B <br> B 01 D 15/00 <br> G 01 N 30/00 |
| A | GB - A - 1 234 063 (PHILIPS) <br> * Totality * | | |

The present search report has been drawn up for all claims

| Place of search | Date of completion of the search | Examiner |
|---|---|---|
| VIENNA | 20-05-1986 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82